# EUROPÄISCHE PATENTSCHRIFT

(11) **EP 1 355 109 B1**
(45) Veröffentlichungstag und Bekanntmachung des Hinweises auf die Patenterteilung: **11.01.2006**
(21) Anmeldenummer: 03008641.7
(22) Anmeldetag: 15.04.2003
(51) Int. Cl.: F22B 31/04, F23G 5/00, F23G 5/46, F01K 23/10

(54) **Verfahren zur energetischen Nutzung von Restabfällen**
Method for generating power from refuse
Procédé pour la valorisation énergétique de déchets

(30) Priorität: 16.04.2002 DE 10217001
(43) Veröffentlichungstag der Anmeldung: 22.10.2003
(73) Patentinhaber: SWE Strom und Fernwärme GmbH, 99086 Erfurt (DE)
(72) Erfinder: Schmidt, Marco, 99099 Erfurt (DE); Schulz, Joachim, 99097 Erfurt (DE); Kott, Klaus, 99189 Hassleben (DE)
(74) Vertreter: Liedtke, Klaus

(56) Entgegenhaltungen:
- EP-A- 0 593 999
- EP-A- 0 713 055
- US-A- 4 882 903
- PATENT ABSTRACTS OF JAPAN vol. 018, no. 143 (M-1574), 9. März 1994 (1994-03-09) & JP 05 321611 A (OSAKA GAS CO LTD), 7. Dezember 1993 (1993-12-07)
- PATENT ABSTRACTS OF JAPAN vol. 1995, no. 06, 31. Juli 1995 (1995-07-31) & JP 07 083005 A (KAWASAKI HEAVY IND LTD), 28. März 1995 (1995-03-28)
- PATENT ABSTRACTS OF JAPAN vol. 017, no. 374 (M-1445), 14. Juli 1993 (1993-07-14) & JP 05 059905 A (MITSUBISHI HEAVY IND LTD), 9. März 1993 (1993-03-09)

## Beschreibung

Die Erfindung betrifft ein Verfahren zur energetischen Nutzung von Restabfällen oder daraus gewonnenen Brennstoffen, wobei die Restabfälle oder daraus gewonnene Brennstoffe verbrannt werden und dabei Dampf mit einer maximalen Temperatur von maximal 400° C erzeugt wird. Solche Verfahren sind aus JP 05-321611, JP 07-083005 und JP 05-059905 bekannt.

Im Stand der Technik ist es bekannt, Restabfall zu verbrennen und die dabei frei werdende Wärme zur Dampferzeugung zu nutzen und gegebenenfalls in elektrische Energie umzuformen. Sofern ein Wärmeabsatzpotential verfügbar ist, wird separat oder ergänzend zur Stromerzeugung auch Wärme ausgekoppelt. Die Stromerzeugung erfolgt dabei in der Regel über einen eigenen Dampflurbinen-Generatorsatz. Aufgrund der durch Korrosions- erscheinungen im Verbrennungsraum auf ca. 400° C limitierten Dampf- temperatur und dem hierzu, insbesondere aus wirtschaftlichen Erwägungen, gewählten Druck von ca. 40 bar ist der dabei erzielte Wirkungsgrad der Stromerzeugung gering.

Es ist auch bekannt, aus den Restabfällen durch Vergasung ein Pyrolysegas herzustellen, das entweder stofflich oder energetisch genutzt werden kann. Ferner sind Verfahren bekannt, mit denen diese Brennstoffe aus Restabfällen so verbrannt werden, dass die entstehenden Brenngase zur Zementherstellung verwendet werden können.

Darüber hinaus ist auch das Mitverbrennen in konventionellen feststoff- gefeuerten Kraftwerken bekannt.

Alle bekannten Formen der energetischen Nutzung von Restabfällen erfordern einen verhältnismäßig hohen Anlagenaufwand.

Der Erfindung liegt deshalb die Aufgabe zugrunde, den im thermischen Teil einer Restabfallbehandlungsanlage entstehenden Dampf so zu nutzen, dass dieser ohne eigene Anlagenkomponenten zur Energieumwandlung - wie Dampfturbine mit Generator und Anlagen der Wärmekopplung - sowie ohne Reduzierung des für eine vorhandene Gas- und Dampfturbinenanlage oder sonstigen Energieumwandlungsanlage zur Verfügung stehenden Wärmeabsatzpotentiales energetisch mit höchstmöglichen Wirkungsgrad genutzt werden kann.

Erfindungsgemäß wird die Aufgabe mit einem Verfahren gelöst, bei dem Dampf mit dem Druckparameter einer benachbarten Gas- und Dampfturbinenanlage oder einer sonstigen eigengefeuerten Kesselanlage erzeugt wird. Dieser Dampf wird dann in einen Kessel eingespeist und mittels einer vorhandenen Feuerung auf die Dampfparameter der Kesselanlage überhitzt. Dabei werden Dampftemperaturen erzeugt, die deutlich über 500° C liegen. Nachfolgend wird dieser Dampf zusammen mit dem Dampf aus der Kesselanlage in den vorhandenen Aggregaten zur Energieumwandlung mittels Kraft-Wärme-Kopplung zur Erzeugung von Strom und Fernwärme genutzt. Zum Ersatz er zur anteiligen Verdrängung der Einspritzkühlung im Überhitzerbereich wird Dampf aus der Verbrennung von Restabfällen mit geringerer Temperatur mit dem Dampf höherer Temperatur einer externen Kesselanlage gemischt der dadurch auf die für die Kesselanlage und eine nachfolgende Dampfturbine (DT) optimale Temperatur konditioniert wird.

Mit dem erfindungsgemäßen Verfahren werden die zur energetischen Verwertung vorgesehenen Restabfälle als Energieträger in einem Dampferzeuger verbrannt. Hierfür können vorhandene bewährte Systeme - wie die Rostverbrennung oder die Wirbelschichtfeuerung - angewandt werden. Im Unterschied zu diesen Konzepten werden jedoch die Dampfparameter druckseitig so hoch gewählt, dass sie zuzüglich einer Komponente für Übertragungsverluste denen des Wasser-Dampf-Kreislaufes der Gas-und Dampfturbinenanlage oder sonstigen Kesselanlage entsprechen. Die Dampftemperatur verbleibt jedoch im Bereich von ca. 400° C um Korrosionsprobleme zu vermeiden. Hierdurch kann der Dampf der Restabfallbehandlungsanlage in die Gas-und Dampfturbinenanlage oder sonstige Kesselanlage eingebunden und auf kraftwerkstypische Parameter überhitzt werden um nachfolgend mittels vorhandener Aggregate zur Energieerzeugung in Kraft-Wärme-Kopplung und somit hohen energetische Wirkungsgrade genutzt zu werden.

Das erfindungsgemäße Verfahren zeichnet sich durch eine Reihe von Vorteilen aus. Es ermöglicht die Einbindung des bei der Verbrennung von Restabfällen oder daraus gewonnenen Brennstoffen entstehenden Dampfes in einem mit einer Zusatzfeuerung versehenen Abhitzekessel einer Gas- und Dampfturbinenanlage oder einer sonstigen eigengefeuerten Kesselanlage sowie die Nutzung durch vorhandene Aggregate zur Energieerzeugung in Kraft-Wärme-Kopplung. Dabei können Dampftemperaturen von deutlich größer 500°C realisiert werden und Korrosionsprobleme in der Restabfallbehandlungsanlage vermieden werden. Darüber hinaus wird das Äquivalent an Wärmeenergie als fossiler Brennstoff, insbesondere Erdgas oder Heizöl, eingespart.

Die Erfindung wird im Folgenden anhand eines Ausfuhrungsbeispieles näher erläutert.

In der zugehörigen Zeichnung zeigen in einer schematischen Darstellung:
- Figur 1: eine Kombikraftwerksanlage mit Zusatzfeuerung
und
- Figur 2: den thermischen Teil einer Restabfallbehandlungsanlage.

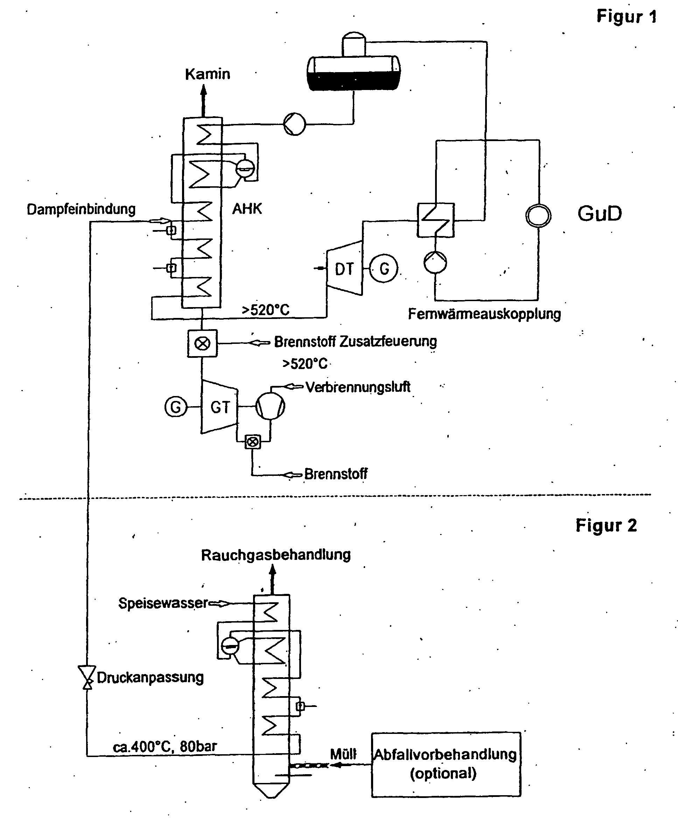

In **Figur 1** ist das technologische Schema einer Energieerzeugungsanlage, welche eine Gas- und Dampfturbinenanlage GuD enthält, dargestellt.

Der Dampf, der aus der Verbrennung von Restabfall oder daraus gewonnenen Brennstoffen erzeugt wurde, wird mit den Parametern 80 bar und 400° C an geeigneter Stelle in den Abhitzekessel AHK eingespeist. In diesem Fall wird durch den kälteren Dampf aus der Restabfallbehandlungsanlage die Einspritzkühlung zwischen erster und zweiter Überhitzerstufe ersetzt bzw. anteilig verdrängt. Der eingespeiste Dampf wird auf die Temperaturparameter des Abhitzekessels überhitzt. Im dargestellten Beispiel beträgt die Temperatur mehr als 520° C. Das Überhitzen kann mittels der vorhandenen erdgas- bzw. heizölbefeuerten Zusatzfeuerung erfolgen.

Der so konditionierte Dampf wird dann durch die Aggregate der Gas- und Dampfturbinenanlage GuD mittels Kraft-Wärme-Kopplung in Strom und Fernwärme umgewandelt. Dabei erfolgt die Umwandlung über bekannte Anordnungen, wie Dampfturbine DT, Generator G, Heizkondensatoren und dergleichen.

Der Erdgas- oder Heizöleinsatz für die Zusatzfeuerung reduziert sich dabei um das durch den Dampf aus der Restabfallbehandlungsanlage in das System der Gas- und Dampfturbinenanlage GuD eingespeiste Wärmeäquivalent.

**Figur 2** erläutert den thermischen Teil einer Restabfallbehandlungsanlage, der erfindungsgemäß mit der Gas- und Dampfturbinenanlage GuD gekoppelt ist. Nach einer optional vorzunehrnenden Abfallvorbehandlung wird der Abfall in einer Müllverbrennung verbrannt und die dabei entstehende Wärme genutzt, indem aus dem dort zugeführtem Speisewasser Dampf mit den Parametern 80 bar und 400° C erzeugt wird. Der dampf wird über eine Druckanpassung in den Abhitzekessel AHK der Gas- und Dampfturbinenanlage GuD geleitet.

### BEZUGSZEICHENLISTE

- GuD: Gas- und Dampfturbinenanlage
- AHK: Abhitzekessel
- DT: Dampfturbine
- G: Generator

## Patentansprüche

1. Verfahren zur energetischen Nutzung von Restabfällen oder daraus gewonnenen Brennstoffen, wobei die Restabfälle oder daraus gewonnene Brennstoffe verbrannt werden und dabei Dampf mit einer Temperatur von maximal 400° C erzeugt wird, aus der Verbrennung der Restabfälle Dampf mit dem Druckparameter einer benachbarten Gas- und Dampfturbinenanlage (GuD) oder einer sonstigen eigengefeuerten Kesselanlage erzeugt wird, welcher dann in einen Kessel der benachbarten Anlage eingespeist und mittels einer dort vorhandenen Feuerung auf die Dampfparameter der Kesselanlage überhitzt wird, wobei Dampflemperaturen erzeugt werden, die deutlich über 500° C liegen, und dieser Dampf nachfolgend zusammen mit dem Dampf aus der Kesselanlage in den vorhandenen Aggregaten zur Energieumwandlung mittels Kraft-Wärme-Kopplung in Strom und Fernwärme genutzt wird, **dadurch gekennzeichnet, dass** zum Ersatz oder zur anteiligen Verdrängung einer Einspritzkühlung im Überhitzerbereich der benachbarten Anlage Dampf aus der Verbrennung von Restabfällen mit geringerer Temperatur mit dem Dampf höherer Temperatur einer externen Kesselanlage gemischt wird, der **dadurch** auf die für die Kesselanlage und eine nachfolgende Dampfturbine (DT) günstige Temperatur konditioniert wird.

## Claims

1. A method for energetically using waste or fuel derived therefrom, wherein the waste or the fuel derived therefrom are combusted and, therein, steam, having a temperature of at most 400 °C, is created from the combustion of the waste, the steam having the pressure parameter of an adjacent gas and steam power plant (GuD) or another separately-fired boiler plant, the steam then being fed to a boiler of the adjacent plant and being overheated to the steam parameters of the boiler plant by means of a firing equipment located there, wherein steam temperatures of significantly more than 500 °C are created and the steam is subsequently used in the available aggregates for energy conversion to electricity and long-distance heating by means of power-heat coupling together with the steam from the boiler plant, **characterised in that**, for replacing or pro-rata displacing an injection cooling, in the overheater area of the adjacent plant steam from the waste combustion, having a lower temperature, is mixed with steam from an external boiler plant, having a higher temperature, which is thereby conditioned to a temperature advantageous for the boiler plant and for a subsequent steam turbine (DT).

## Revendications

1. Procédé pour l'exploitation énergétique de déchets résiduels ou de matières combustibles obtenues à partir de ceux-ci, où les déchets résiduels ou les matières combustibles obtenues à partir de ceux-ci sont incinérés, de la vapeur étant alors générée ayant une température maximale de 400°C, de la vapeur étant par incinération des déchets résiduels produite avec le paramètre de pression d'une installation à turbine à gaz et à vapeur voisine ou d'une autre installation à chaudière à combustion propre, laquelle alimente ensuite une chaudière de l'installation voisine et y est surchauffée par un foyer existant aux paramètres de vapeur de l'installation à chaudière, des températures de vapeur sensiblement supérieures à 500 ° C étant générées, et cette vapeur étant consécutivement utilisée avec la vapeur de l'installation à chaudière dans les agrégats présents pour la conversion d'énergie en courant et en chaleur à distance par couplage force-chaleur, **caractérisé en ce que**, pour la substitution ou la réduction proportionnelle d'un refroidissement par injection dans la zone de surchauffe de l'installation voisine, de la vapeur d'incinération des déchets résiduels, à température moindre, est mélangée avec la vapeur à température supérieure d'une installation à chaudière externe, laquelle est ainsi conditionnée à la température favorable pour l'installation à chaudière et pour une turbine à vapeur en aval.
